# EUROPÄISCHE PATENTANMELDUNG

(11) **EP 2 175 249 A1**
(43) Veröffentlichungstag der Anmeldung: **14.04.2010**
(21) Anmeldenummer: 08166456.7
(22) Anmeldetag: 13.10.2008
(51) Int. Cl.: G01G 3/14

(54) **Kraftmessvorrichtung**

(71) Anmelder: Mettler-Toledo AG, 8606 Greifensee (CH)
(72) Erfinder: Schneider, Ferdinand, CH-8406 Winterthur (CH); Scheu, Matthias, CH-8610 Uster (CH); Metzger, Andreas, CH-8708 Männedorf (CH); Burkhard, Hans-Rudolf, CH-8492 Wila (CH); Schilling, Peter, CH-8854 Siebnen (CH)

(57) **Zusammenfassung**

Eine Kraftmessvorrichtung (1,101,201,301,401,501,601) mit einem Lasteinleitungsbereich, einem Festbereich und einem Parallelführungsbereich, welche zusammen als einstückige Parallelogrammführung ausgebildet sind, besitzt einen den Festbereich bildenden feststehenden Parallelogrammschenkel (5,105,405), einen den Krafteinleitungsbereich bildenden beweglichen Parallelogrammschenkel (6,106,206,306,406,606), sowie einen oberen und einen unteren Parallelogrammlenker (7,107,207,307,407,507,607; 8,108), welche an ihren Enden durch Bielelagerstellen (9,10,11,12,409,611a,611b) mit den Parallelogrammschenkeln (5,105,405; 6,106,206,306,406,606) verbunden sind. Ein als Trägerarm (25,125,225,325,425,625) ausgebildeter Waagschalenträger ist im Krafteinleitungsbereich in der Weise monolithisch integriert, dass der Trägerarm (25,125,225,325,425,625) sich als integrale Fortsetzung des beweglichen Parallelogrammschenkels (6,106,206,306,406,606) im wesentlichen parallel zum oberen Parallelogrammlenker (7,107,207,307,407,507,607) in Richtung des feststehenden Parallelogrammschenkels (5,105,405) über die dem beweglichen Parallelogrammschenkel (6,106,206,306,406,606) zugewandte Biegelagerstelle (11,611 a, 611 b) hinaus erstreckt, wobei mindestens ein Sitz (27,127a,127b,127c,227,327,427,527,627) für eine Waagschale (3,203,303,403) auf dem Trägerarm (25,125,225,325,425,625) angeordnet ist.

## Beschreibung

Gegenstand der vorliegenden Erfindung ist eine Kraftmessvorrichtung, insbesondere eine Wägezelle, die sich zum Einbau in verschiedenartigen Waagen mit kleiner bis mittlerer Lastkapazität eignet, z.B. in Laborwaagen, Ladenwaagen, Zählwaagen und dergleichen. Eine Kraftmessvorrichtung der Gattung, welche hierin im Rahmen der Erfindung betrachtet wird, umfasst allgemein:
- einen Lasteinleitungsbereich, durch welchen die zu messende Kraft in die Kraftmessvorrichtung eingeleitet wird;
- einen Festbereich, durch welchen die Kraftmessvorrichtung auf einer tragenden Struktur, zum Beispiel auf der Grundplatte einer Waage, abgestützt und befestigt werden kann;
- einen Parallelführungsbereich, welcher dafür sorgt, dass die durch die Messkraft verursachte wirkliche oder virtuelle Auslenkung des Lasteinleitungsbereichs eine translatorische Bewegung ist, d.h. dass der Lasteinleitungsbereich zu sich selber parallel bleibt; und
- einen Kraftübertragungsbereich, welcher die Messkraft vom Lasteinleitungsbereich entweder direkt oder durch eine Hebeluntersetzung an einen elektromechanischen Messwandlerbereich überträgt, wo die Messkraft in ein elektrisches Ausgangssignal der Kraftmessvorrichtung umgewandelt wird, welches anschliessend einer Auswerteelektronik zur weiteren Verarbeitung zugeführt wird.

Dabei ist der mechanische Aufbau, welcher die genannten Bereiche der Krafteinleitung, Befestigung, Parallelführung und Kraftübertragung umfasst, entweder ganz oder mindestens in einzelnen Teilen in monolithischer Bauweise ausgeführt, wobei die verschiedenen stationären und beweglichen Teile sowie die sie verbindenden elastischen Biegelagerstellen als zusammenhängender, einstückiger Mechanismus z.B. durch Funkendrahterosion oder vermittels Fräsen aus einem quaderförmigen Materialblock geformt werden.

Eine solche einstückige Wägezelle aus dem bekannten Stand der Technik ist zum Beispiel in EP 0 518 202 A1 beschrieben und abgebildet. Durch schmale Trennschnitte wird in einem quaderförmigen Materialblock ein Lenkerparallelogramm ausgebildet, worin ein oberer und ein unterer Lenker durch Bielelagerstellen mit einem den Festbereich bildenden feststehenden Parallelogrammschenkel und einem den Krafteinleitungsbereich bildenden beweglichen Parallelogrammschenkel verbunden sind. Ausserdem wird in dem von den Parallelogramlenkern und -schenkeln umgrenzten Innenbereich des Quaders durch weitere Trennschnitte eine ein- oder mehrstufige Hebeluntersetzung ausgebildet.

In einer ebenfalls in EP 0 518 202 A1 beschriebenen Variante ist die Kraftmessvorrichtung aus zwei separaten, jeweils für sich einstückigen Komponenten zusammengesetzt, nämlich aus einem einstückig geformten Lenkerparallelogramm und aus einer ebenfalls einstückig geformten dreistufigen Hebeluntersetzung, wobei die Letztere im Innenbereich des Lenkerparallelogramms zum Beispiel durch Verschrauben montiert wird.

Bei den beiden genannten Ausführungsformen der Kraftmessvorrichtung gemäss EP 0 518 202 A1 wird die Kraft auf nicht näher beschriebene Art und Weise in den beweglichen Parallelogrammschenkel eingeleitet, welcher Gewindelöcher aufweist, wo z.B. ein Waagschalenträger angeschraubt werden könnte.

In EP 1 448 961 B1 wird für eine Kraftmessvorrichtung der vorstehend beschriebenen Art ein Waagschalenträger mit Überlastschutz beschrieben. Der Waagschalenträger ist dabei als Trägerarm ausgebildet, welcher oben auf dem beweglichen Parallelogrammschenkel aufgeschraubt wird und sich von dieser Anschraubstelle im wesentlichen parallel zum oberen Parallelogrammlenker bis etwa oberhalb der Mitte desselben erstreckt, wo ein kegelstumpfförmiger Aufsatz mit integrierter Überlastabfederung als Sitz für eine Waagschale auf dem Trägerarm angeordnet ist. Zusätzlich kann an dieser aufschraubbaren Waagschalenträgereinheit eine Auflage für mindestens ein zu- und abschaltbares Referenzgewicht angeordnet sein.

In EP 1 564 534 A1 wird ein Wägezellenmodul beschrieben, auf welchem wahlweise ein Waagschalenträger mit einem einzigen z.B. kegelstumpfförmigen Waagschalensitz oder ein Waagschalenträger mit einer Mehrpunktauflage, z.B. für eine rechteckige Wägeplattform, montiert werden kann. Auch an dieser aufschraubbaren Waagschalenträgereinheit kann zusätzlich eine Auflage für mindestens ein zu- und abschaltbares Referenzgewicht angeordnet sein.

Schliesslich zeigt DE 602 06 339 T2 (Deutsche Übersetzung der Europäischen Patentschrift EP 1 288 636 B1) eine Kraftmessvorrichtung der hier betrachteten Gattung, bei welcher sowohl der feststehende als auch der bewegliche Parallelogrammschenkel zumindest teilweise in der horizontalen Querrichtung des die Kraftmessvorrichtung bildenden Materialblocks verbreitert sind, um die von Gewindebohrungen durchsetzten Partien für die Montage auf einer Basisstruktur und für die Befestigung eines Waagschalenträgers zu verstärken.

Den vorstehend beschriebenen und aus dem Stand der Technik bekannten Wägezellen ist gemeinsam, dass ein Waagschalenträger als separates Bauteil am beweglichen Schenkel des Lenkerparallelogramms angeschraubt wird. Dies verursacht einerseits einen gewissen Aufwand für die separate Fertigung und das Montieren des Waagschalenträgers, und andrerseits können durch das Verschrauben des Waagschalenträgers mit der Wägezelle innere Spannungen und damit verbundene Deformationen im mechanischen Aufbau der Wägezelle entstehen, welche die Wägegenauigkeit beeinträchtigen können.

Die vorliegende Erfindung hat deshalb zur Aufgabe, eine Kraftmessvorrichtung der oben beschriebenen Gattung zu schaffen, welche sich im Vergleich zum Stand der Technik mit geringerem Aufwand herstellen lässt, welche die oben erwähnten möglichen inneren Spannungen vemeidet, und welche sich andrerseits ohne weiteres mit vorteilhaften Elementen aus dem bekannten Stand der Technik kombinieren lässt.

Diese Aufgabe wird gelöst durch eine Kraftmessvorrichtung, insbesondere eine Wägezelle, mit einem Lasteinleitungsbereich, einem Festbereich, einem Parallelführungsbereich, und einem Kraftübertragungsbereich, worin zumindest der Lasteinleitungsbereich, der Festbereich und der Parallelführungsbereich zusammen als einstückige Parallelogrammführung ausgebildet sind, mit einem den Festbereich bildenden feststehenden Parallelogrammschenkel, einem den Krafteinleitungsbereich bildenden beweglichen Parallelogrammschenkel, sowie einem oberen und einem unteren Parallelogrammlenker, welche an ihren Enden durch Biegelagerstellen mit den Parallelogrammschenkeln verbunden sind. In der erfindungsgemässen Kraftmessvorrichtung ist ein Waagschalenträger monolithisch im Krafteinleitungsbereich integriert, wobei dieser Waagschalenträger als Trägerarm ausgebildet ist, welcher sich als integrale Fortsetzung des beweglichen Parallelogrammschenkels im wesentlichen parallel zum oberen Parallelogrammlenker in Richtung zum feststehenden Parallelogrammschenkel hin über die dem beweglichen Parallelogrammschenkel zugewandte Biegelagerstelle hinaus erstreckt, wobei mindestens ein Sitz für eine Waagschale auf dem Trägerarm angeordnet ist.

Ausdrücke wie "oben", "unten", "senkrecht", usw., beziehen sich durchwegs auf die Orientierung der Kraftmessvorrichtung im betriebsbereiten Zustand, bzw. in deren Anwendung im Bereich des Wägens auf die Richtung der Schwerkraft.

Dadurch, dass der Trägerarm als integrale Fortsetzung des beweglichen Parallelogrammschenkels ausgebildet ist, bedarf es bei der Herstellung einer monolithisch ausgebildeten Kraftübertragungsvorrichtung lediglich eines zusätzlichen Bearbeitungsschritts, um den Waagschalenträger auszubilden und gleichzeitig mit der Kraftübertragungsvorrichtung zu verbinden. Schraubverbindungen oder ähnliches entfallen und damit auch sich möglicherweise auf die Genauigkeit des Wägeprozesses auswirkende Verspannungen in deren Bereich.

Der Trägerarm kann nun auf gleicher Höhe mit dem oberen Parallelogrammlenker ausgebildet sein oder sich mit geringem Abstand zu diesem in die Richtung zum feststehenden Parallelogrammschenkel hin erstrecken. Insbesondere im ersteren Fall ergibt sich eine Verringerung der Bauhöhe der Kraftmessvorrichtung.

Der Trägerarm kann sich nun nicht nur über die erste, d.h. die dem beweglichen Parallelogrammschenkel zugewandte Biegelagerstelle des oberen Parallelogrammlenkers hinaus erstrecken, sondern auch über die zweite, d.h. die dem feststehenden Parallelogrammschenkel zugewandte Biegelagerstelle bis in den Bereich des feststehenden Parallelogrammschenkel hinein.

Damit wird eine hohe Flexibilität hinsichtlich der Platzierung der Waagschale in Bezug auf die Kraftübertragungsvorrichtung erzielt, welche noch dadurch erhöht werden kann, dass auf dem Trägerarm nicht nur ein sondern auch mehrere Sitze für die Waagschale vorhanden sein können. Soll also die Waageschale eine bestimmte Position einnehmen, beispielsweise bei Einbau der Waage in eine Anlage, so kann dies mit geringeren Toleranzproblemen erfolgen, als in Fällen, mit beispielsweise einer Schraubverbindung zwischen Trägerarm und beweglichem Parallelogrammschenkel.

In einer bevorzugten Ausführungsform der erfindungsgemässen Kraftmessvorrichtung hat der feststehende Parallelogrammschenkel einen Ausleger, welcher den von den Parallelogrammlenkern und dem beweglichen Parallelogrammschenkel umgrenzten Innenbereich weitgehend ausfüllen kann.

Der Kraftübertragungsbereich kann hier ebenfalls monolithisch in der Kraftmessvorrichtung integriert sein, beispielsweise in der Form eines Hebelwerks mit mindestens einem Hebel. Ein Hebel des Hebelwerks ist durch ein Biegelager am Ausleger des feststehenden Parallelogrammschenkels drehbar gelagert, wobei beispielsweise im Falle eines einarmigen Hebelsystems ein Hebelarm des Hebels durch ein Kopplungsglied mit dem beweglichen Parallelogrammschenkel verbunden ist, während der andere Hebelarm mit einer Hebelverlängerung verbunden werden kann, an welcher eine Kraftkompensationsspule eines elektromagnetischen Kraftkompensationssystems befestigt ist.

Die mit dem beweglichen Parallelogrammschenkel direkt oder über eine Hebeluntersetzung verbundene Kraftkompensationsspule eines elektromagnetischen Kraftkompensationssystems arbeitet normalerweise mit einer Permanentmagnetanordnung zusammen, welche am feststehenden Parallelogrammschenkel festgelegt ist. Der feststehende Parallelogrammschenkel ist zur Aufnahme und Befestigung der Permanentmagnetanordnung z.B. mit einem vom feststehenden Parallelogrammschenkel nach aussen vorspringenden horizontalen Träger versehen, auf welchem die Permanentmagnetanordnung montiert werden kann.

Auf der dem horizontalen Träger entgegengesetzten Seite der Kraftmessvorrichtung kann am beweglichen Parallelogrammschenkel eine Aufnahme für ein Kalibriergewicht entweder einstückig am beweglichen Parallelogrammschenkel angeformt oder an demselben als separat gefertigtes Bauteil befestigt sein.

Vorzugsweise ist der mindestens eine Sitz für die Waagschale als eine senkrechte Bohrung mit konischem Anzug in dem Trägerarm ausgebildet, welche einen unten an der Waagschale befestigten konischen Zapfen spielfrei aufnehmen kann. Die Waagschale kann also zentriert in Bezug auf die Bohrung beziehungsweise in einer Richtung aus dieser entfernbar positioniert werden.

Dabei verläuft die senkrechte Bohrung mit Vorteil nicht nur als konische Bohrung durch den Trägerarm sondern erstreckt sich weiter als zylindrische Durchgangsbohrung durch den oberen Parallelogrammlenker und gegebenenfalls weiter als Sackbohrung in den Ausleger des feststehenden Parallelogrammschenkels. Der Durchmesser der zylindrischen Durchgangsbohrung und gegebenenfalls der Sackbohrung ist dabei so bemessen, dass der im Trägerarm sitzende konische Zapfen der Waagschale mit hinreichender Lichtweite durch den oberen Lenker hindurch ragt und bei Überbelastung der Kraftmessvorrichtung auf der Oberfläche des Auslegers oder gegebenenfalls auf dem Grund der Sackbohrung anschlägt, wodurch eine weitere Auslenkung und damit gegebenenfalls eine Beschädigung der Kraftmessvorrichtung verhindert wird.

Bei der vorstehend beschriebenen Ausführungsform der erfindungsgemässen Kraftmessvorrichtung mit der konischen Bohrung im Trägerarm, welche sich als zylindrische Bohrung durch den oberen Lenker und gegebenenfalls in den Ausleger des feststehenden Parallelogrammschenkels hinein fortsetzt, kann die Funktion eines Überlastschutzes auf die verschiedensten Arten mit dem konischen Sitz der Waagschale vereinigt sein. In einer weiteren Ausführungsform kann der konische Zapfen z.B. eine senkrechte zylindrische Bohrung aufweisen, in welcher ein Stift gleiten kann, an dessen oberer Stirnseite die Waagschale befestigt ist, wobei eine den Stift umgebende Druckfeder die Waagschale gegenüber dem konischen Zapfen nach oben vorspannt. Wenn infolge einer Überlast auf der Waagschale die Vorspannkraft der Druckfeder überschritten wird, so senkt sich die Waagschale soweit ab bis die untere Stirnseite des Stiftes auf der Oberfläche des Auslegers oder gegebenenfalls auf dem Grund der Sackbohrung aufsteht.

Alternativ kann der Überlastschutz durch Anschlagen des konischen Zapfens z.B. auch in der Weise realisiert sein, dass der Trägerarm an einer erfindungsgemässen Kraftmessvorrichtung derart ausgebildet wird, dass er sich unter Belastung soweit durchbiegt, dass der konische Zapfen bei Erreichen einer Überlastgrenze zum Anschlag kommt. Alternativ kann es auch der Waagschalenträger selbst sein, der am Ausleger oder am feststehenden Parallelogrammschenkel anschlägt, je nach Länge und Ausgestaltung des Trägerarms.

In einer weiteren Ausführungsform der erfindungsgemässen Kraftmessvorrichtung ist der Sitz für die Waagschale als kegelstumpfförmige Erhebung auf dem Trägerarm z.B. durch einen Fräsvorgang angeformt. Die Waagschale besitzt in diesem Fall ein Verbindungselement, z.B. in Form einer Hülse, mit einer zu der kegelstumpfförmigen Erhebung komplementären konischen Bohrung, wodurch die Waagschale satt und spielfrei auf die kegelstumpfförmige Erhebung aufgesetzt werden kann, um auch hier wiederum zentriert in Bezug auf den Konus beziehungsweise in einer Richtung vom Konus lösbar positioniert werden zu können.

Auch bei dieser Ausführungsform kann ein Überlastschutz auf verschiedene Arten realisiert werden. Beispielsweise kann die kegelstumpfförmige Erhebung mit einer konzentrischen senkrechten Gewindebohrung versehen sein, welche sich als Durchgangsbohrung durch den oberen Parallelogrammlenker fortsetzt. Eine Stellschraube, die sich nach unten zu einem Stift verjüngt wird darin soweit eingeschraubt, dass der Stift, welcher die Durchgangsbohrung des Parallelogrammlenkers mit genügendem lichtem Abstand durchsetzt, einen gewünschten Anschlagsabstand vom feststehenden Parallelogrammschenkel hat.

Auch hier kann in einer alternativen Ausführungsform es der Waagschalenträger selbst sein, der am Ausleger oder am feststehenden Parallelogrammschenkel anschlägt, je nach seiner Länge und Ausgestaltung.

Für die Montage auf einer Grundplatte ist die erfindungsgemässe Kraftmessvorrichtung mit Gewindebohrungen versehen, die an und für sich an beliebigen Stellen des Festbereiches angebracht werden können. Es ist jedoch vorteilhaft, wenn die Verbindungsstelle, wo die Kraftmessvorrichtung auf der Grundplatte einer Waage aufliegt, im Wesentlichen senkrecht unter dem Sitz für die Waagschale angeordnet ist. So erfolgt die Kraftausleitung von der Kraftmessvorrichtung in die Grundplatte im Wesentlichen entlang derselben vertikalen Achse wie die Krafteinleitung in die Kraftmessvorrichtung. Damit der Festbereich direkt unterhalb des Waagschalensitzes mit der Grundplatte verbunden werden kann, weist der untere Parallelogrammlenker einen Durchbruch für einen erhabenen Montiersockel der Grundplatte auf, und der Ausleger des feststehenden Parallelogrammschenkels ist mit Gewindebohrungen von der Unterseite her versehen, damit die Kraftmessvorrichtung auf der Grundplatte festgeschraubt werden kann.

In einer alternativen Ausführungsform der Erfindung ist nur das Lenkerparallelogramm zusammen mit dem Trägerarm als monolithische Einheit ausgebildet. Der Kraftübertragungsbereich ist als separates, gegebenenfalls für sich einstückiges Bauteil in der Form eines ein- oder mehrstufigen Hebelsystems im offenen Innenbereich des Lenkerparallelogramms am feststehenden Parallelogrammschenkel festgelegt, wobei ein Eingangshebelarm des Hebelsystems durch ein Kopplungsglied mit dem beweglichen Parallelogrammschenkel verbunden ist und ein Ausgangshebelarm eine Kraftkompensationsspule eines elektromagnetischen Kraftkompensationssystems trägt. Das Konzept eines separaten und für sich einstückigen Kraftübertragungsbereiches ist im Detail dargestellt in der europäischen Patentanmeldung EP 0 518 202 A1, deren Inhalt hiermit vollumfänglich in die vorliegende Anmeldung mit aufgenommen wird.

Weitere Merkmale, Einzelheiten und Vorteile der Erfindung ergeben sich aus der folgenden Beschreibung und den stark schematisierten Zeichnungen, deren Inhalt nachfolgend zusammengefasst wird:
- Figur 1: zeigt im Längsschnitt den mechanischen Aufbau einer ersten Ausführungsform der erfindungsgemässen Kraftmessvorrichtung mit aufgesetzter Waagschale;
- Figur 2: zeigt in perspektivischer Darstellung die Kraftmessvorrichtung der Figur 1 ohne Grundplatte und ohne Waagschale, wobei drei Bohrungen mit konischem Anzug als Sitz für eine Waagschale vorhanden sind;
- Figur 3: zeigt nochmals die Kraftmessvorrichtung von Figur 1, worin jedoch die aufgesetzte Waagschale einen von Figur 1 verschiedenen Überlastschutz aufweist und worin eine Kalibriergewichtsauflage am beweglichen Parallelogrammschenkel einstückig angeformt ist;
- Figur 4: zeigt im Längsschnitt den mechanischen Aufbau einer zweiten Ausführungsform der erfindungsgemässen Kraftmessvorrichtung mit aufgesetzter Waagschale;
- Figur 5: zeigt im Längsschnitt den mechanischen Aufbau einer dritten Ausführungsform der erfindungsgemässen Kraftmessvorrichtung mit aufgesetzter Waagschale;
- Figur 6: zeigt eine Detailansicht zur Veranschaulichung eines möglichen Überlastschutzes in der Kraftmessvorrichtung von Figur 4 oder 5; und
- Figur 7: zeigt eine vierte Ausführungsform einer Kraftmessvorrichtung in perspektivischer Darstellung, worin der Trägerarm in einer weiteren Art am beweglichen Parallelogrammschenkel einstückig angeformt ist;

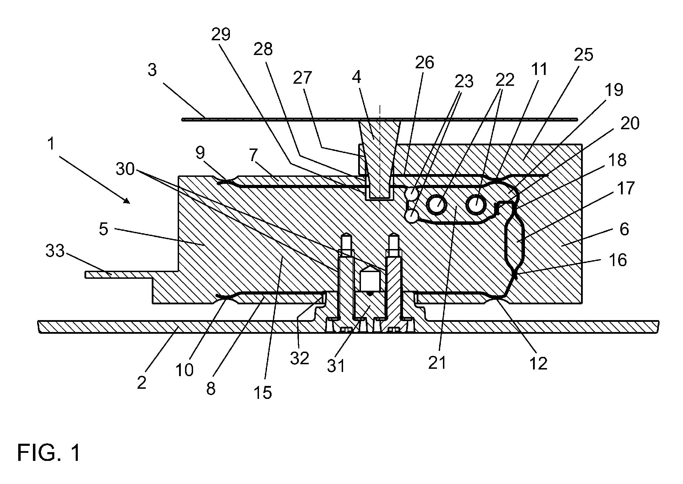

In Figur 1 ist eine erste Ausführungsform des mechanischen Aufbaus der erfindungsgemässen Kraftmessvorrichtung 1 dargestellt. Zur Veranschaulichung der Verwendung und Funktionsweise der Kraftmessvorrichtung 1 zeigt die Figur auch die Grundplatte 2 auf welcher die Kraftmessvorrichtung montiert ist sowie die Waagschale 3 welche mit einem konischen Zapfen 4 auf der Kraftmessvorrichtung 1 aufgesetzt ist.

Die Kraftmessvorrichtung oder Wägezelle 1 umfasst einen einstückigen oder monolithischen, im wesentlichen quaderförmigen Materialblock, in welchem durch senkrecht zur Zeichenebene von Figur 1 verlaufende Schnitte die Elemente einer Parallelführung und einer Hebelübersetzung gebildet werden. Man erkennt als Elemente der Parallelführung den feststehenden Parallelogrammschenkel 5, den beweglichen Parallelogrammschenkel 6, den oberen Parallelogrammlenker 7, sowie den unteren Parallelogrammlenker 8. Die Parallelogrammlenker 7, 8 sind über die Biegelager 9, 10 mit dem feststehenden Parallelogrammschenkel 5 und über die Biegelager 11, 12 mit dem beweglichen Parallelogrammschenkel 6 verbunden. Bei den Biegelagern 9, 10, 11, 12 sowie den nachfolgend erwähnten weiteren Biegelagern 16, 18, 20 handelt es sich um dünne und damit elastisch biegsame Materialbereiche, welche durch Verengungen zwischen nebeneinander verlaufenden Trennschnitten gebildet werden.

Der feststehende Parallelogrammschenkel 5 setzt sich in einem massiven Ausleger 15 fort, welcher den von den Parallelogrammlenkern 7, 8 und dem beweglichen Parallelogrammschenkel 6 umgrenzten Innenbereich nahezu ausfüllt. Der bewegliche Parallelogrammschenkel 6 ist durch ein Biegelager 16 mit einem senkrechten Kopplungsglied 17 verbunden, welches seinerseits durch ein Biegelager 18 mit dem kürzeren Arm 19 eines zweiarmigen Hebels verbunden ist, welcher sich durch ein Biegelager 20 auf dem Ausleger 15 abstützt. Der längere Arm 21 des zweiarmigen Hebels 19, 21 hat zwei Befestigungslöcher 22 zum Anschrauben einer Hebelverlängerung (nicht eingezeichnet), an welcher eine Kraftkompensationsspule eines elektromagnetischen Kraftkompensationssystems befestigt werden kann. Zwei weitere Löcher 23 am in der Zeichnung linken Ende des Hebelarms 21 dienen zum Einführen eines Funkenerosionsdrahtes für die Erzeugung der Trennschnitte bei der Herstellung der erfindungsgemässen Kraftmessvorrichtung 1.

Der bewegliche Parallelogrammschenkel 6 setzt sich in seinem oberen Teil in einen Trägerarm 25 fort, welcher ebenfalls einstückig in dem Materialblock ausgebildet und durch einen Trennschnitt 26 vom oberen Parallelogrammlenker 7 abgegrenzt ist. Etwa oberhalb der Mitte des oberen Parallelogrammlenkers 7 hat der Trägerarm 25 eine Bohrung 27, welche mindestens bis zu einer gewissen Tiefe einen konischen Anzug besitzt, sodass die Bohrung 27 dem konischen Zapfen 4 der Waagschale 3 einen satten und wackelfreien Sitz bietet. Die Bohrung 27 setzt sich als zylindrische Bohrung 28 durch den oberen Parallelogrammlenker 7 und gegebenenfalls als zylindrische Sackbohrung 29 in den Ausleger 15 hinein fort. Im Falle einer Überlast auf der Waagschale 3 kommt somit der konische Zapfen 4 mit seiner unteren Stirnseite zum Anschlag mit dem Ausleger 15, so dass eine weitere Auslenkung und damit gegebenenfalls eine Beschädigung der Kraftmessvorrichtung 1 verhindert wird.

Für die Montage auf der Grundplatte 2 ist die erfindungsgemässe Kraftmessvorrichtung 1 mit Gewindebohrungen 30 im Ausleger 15 des feststehenden Parallelogrammschenkels versehen, welche im wesentlichen senkrecht unter dem Sitz für die Waagschale 3, d.h. der konischen Bohrung 27, angeordnet sind. Damit der Ausleger 15 der Kraftmessvorrichtung 1 auf einem erhabenen Montiersockel 31 der Grundplatte 2 angeschraubt werden kann, weist der untere Parallelogrammlenker 8 einen Durchbruch 32 auf, durch welchen der Montiersockel 31 mit lichtem Abstand hindurchragt.

Wie oben erwähnt, dienen die Löcher 22 im Hebelarm 21 zur Befestigung einer nicht dargestellten Hebelverlängerung mit einer Kraftkompensationsspule, welche mit einer am feststehenden Parallelogrammschenkel 5 angeordneten Permanentmagnetanordnung zusammenarbeitet. Als Befestigungsmöglichkeit für eine solche Permanentmagnetanordnung ist ein in der Zeichnung nach links vorspringender horizontaler Träger 33 gezeigt, welcher mit dem feststehenden Parallelogrammschenkel 5 einstückig verbunden ist und auf welchem die Permanentmagnetanordnung montiert werden kann.

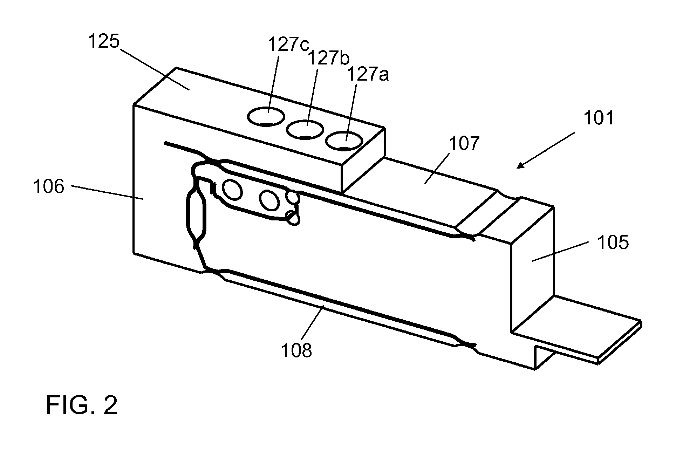

Um eine anschauliche Vorstellung der erfindungsgemässen Kraftmessvorrichtung 101 zu vermitteln zeigt Figur 2 eine solche in perspektivischer Darstellung, jedoch ohne Grundplatte und ohne aufgesetzte Waagschale. Zu sehen ist die Parallelführung aus feststehendem Parallelogrammschenkel 105, beweglichem Parallelogrammschenkel 106 und dem oberen sowie dem unteren Parallelogrammlenker 107, 108. Es ist zu sehen, dass der Trägerarm 125 anstelle einer Bohrung mit konischem Anzug zur Aufnahme einer Waagschale mit entsprechendem Gegenstück gleich drei solcher Bohrungen 127a, 127b und 127c aufweist. Dadurch kann beispielsweise ein Benutzer einer Waage mit einer derart gestalteten Kraftmessvorrichtung 101 die Waagschale nach Wahl bzw. Platzverhältnissen auf dem Trägerarm 125 positionieren. Oder dieselbe Kraftmessvorrichtung kann in verschiedenen Gehäusen mit unterschiedlichen Waagschalenpositionen verbaut werden.

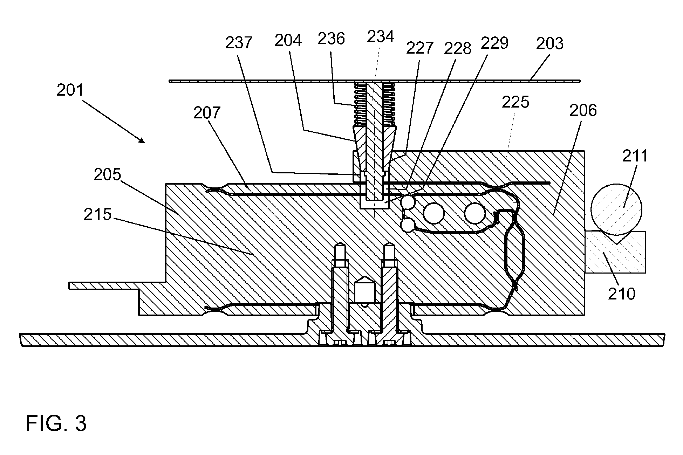

In Figur 3 werden zwei Detailvarianten der Kraftmessvorrichtung von Figur 1 illustriert. An der Waagschale 203 ist ein zylindrischer Stift 234 befestigt, auf welchem ein senkrecht durchbohrter konischer Zapfen 204 und eine Schraubendruckfeder 236 gleitend angeordnet sind, wobei die Schraubendruckfeder gegen den konischen Zapfen 204 vorgespannt ist und denselben gegen einen Anschlag 237 des Stiftes 234 drückt. Diese Überlastschutzvorrichtung kann so dimensioniert sein, dass sie in die Bohrungen 227, 228, 229 im Trägerarm 225, im oberen Parallelogrammlenker 207 und im Ausleger 215 des feststehenden Parallelogrammschenkel 205 der Kraftmessvorrichtung 201 passt. Wenn infolge einer Überlast auf der Waagschale 203 die Vorspannkraft der Druckfeder 236 überschritten wird, so senkt sich die Waagschale 203 soweit ab, bis die untere Stirnseite des Stiftes 234 auf dem Ausleger 215 ansteht.

Als weiteres Detail zeigt Figur 3 eine Aufnahme 210 für ein Kalibriergewicht 211. Die Aufnahme 210 kann entweder einstückig am beweglichen Parallelogrammschenkel 206 angeformt oder als separates Bauteil befestigt sein.

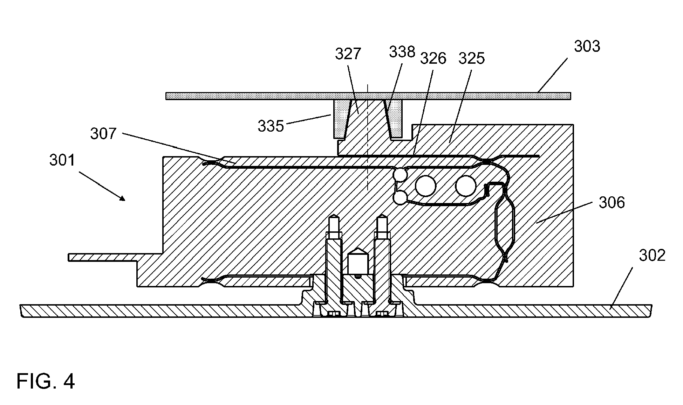

In Figur 4 ist der mechanische Aufbau einer erfindungsgemässen Kraftmessvorrichtung 301 gemäss einer zweiten Ausführungsform dargestellt. Wie in Figur 1 erkennt man auch hier eine Grundplatte 302, welche z.B. Bestandteil eines im Übrigen nicht dargestellten Waagengehäuses ist und auf welcher die Kraftmessvorrichtung 301 montiert ist.

Die Kraftmessvorrichtung 301 unterscheidet sich von der in Figur 1 dargestellten Kraftmessvorrichtung 1 in der nachfolgend beschriebenen Gestaltung des Trägerarms 325. Als Fortsetzung des oberen Teils des beweglichen Parallelogrammschenkels 306 ist der Trägerarm 325 ebenfalls einstückig in dem Materialblock ausgebildet und durch einen Trennschnitt 326 vom oberen Parallelogrammlenker 307 abgegrenzt. Etwa oberhalb der Mitte des oberen Parallelogrammlenkers 307 ist auf dem Trägerarm 325 eine kegelstumpfförmige Erhebung 327 einstückig angeformt, welche bei der Herstellung der Kraftmessvorrichtung 301 z.B. durch einen Fräsvorgang erzeugt werden kann. Die Waagschale 303 besitzt in diesem Fall ein z.B. als Hülse 335 ausgebildetes Verbindungselement mit einer zu der kegelstumpfförmigen Erhebung 327 komplementären konischen Bohrung 338, wodurch die Waagschale 303 satt und spielfrei auf die kegelstumpfförmige Erhebung 327 aufgesetzt werden kann.

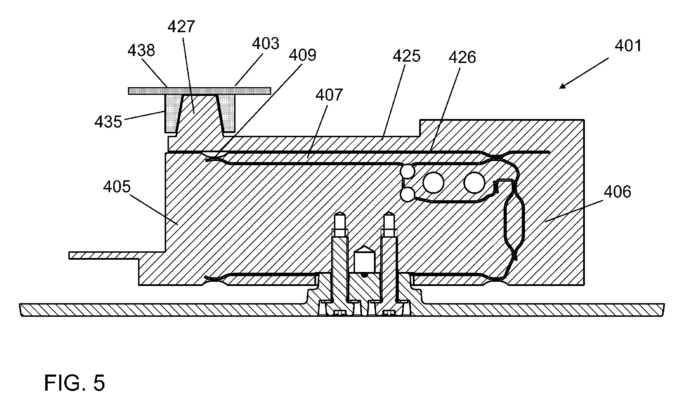

Figur 5 zeigt eine Kraftmessvorrichtung 401, bei welcher ähnlich wie in Figur 4 der Trägerarms 425 als Fortsetzung des oberen Teils des beweglichen Parallelogrammschenkels 406 einstückig in dem Materialblock ausgebildet ist und durch einen Trennschnitt 426 vom oberen Parallelogrammlenker 407 abgegrenzt ist. Der Trägerarm 425 setzt sich jedoch auch über das Biegelager 409 hinaus bis in den Bereich des feststehenden Parallelogrammschenkels 405 fort, wo eine kegelstumpfförmige Erhebung 427, ähnlich wie sie die Figur 4 zeigt, einstückig angeformt ist. Auf die kegelstumpfförmige Erhebung 427 ist die Waagschale 403 mit dem als Hülse 435 ausgebildeten Verbindungselement mit der zur kegelstumpfförmigen Erhebung 427 komplementären konischen Bohrung 438 satt und spielfrei aufgesetzt.

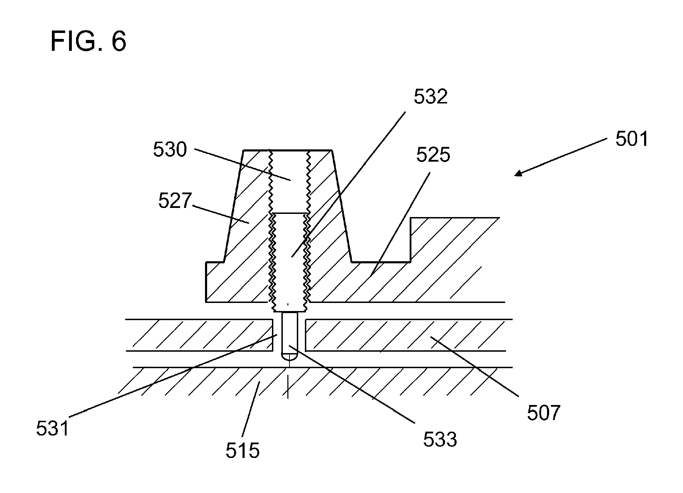

Figur 6 zeigt eine Möglichkeit, wie bei einer Kraftmessvorrichtung 501 gemäss der vorstehend beschriebenen Ausführungsformen in Figur 4 und Figur 5 ein Überlastschutz realisiert werden kann. Im hier abgebildeten Beispiel ist die mit dem Trägerarm 525 einstückig verbundene kegelstumpfförmige Erhebung 527 mit einer konzentrischen senkrechten Gewindebohrung 530 versehen, welche sich als Durchgangsbohrung 531 durch den oberen Parallelogrammlenker 507 fortsetzt. Eine Stellschraube 532, die sich in ihrem unteren Teil zu einem Stift 533 verjüngt wird darin soweit eingeschraubt, dass der Stift 533, welcher die Durchgangsbohrung 531 des Parallelogrammlenkers 507 mit genügendem lichtem Abstand durchsetzt, einen gewünschten Abstand von der Anschlagsstelle auf dem Ausleger 515 des feststehenden Parallelogrammschenkels hat. Denkbar ist auch eine zusätzliche Begrenzung der Bewegung des Waagschalenträgers nach oben, indem der feststehende Parallelogrammschenkel mit einem gegebenenfalls einstückig an diesen angeformten oberen Anschlag ausgestaltet ist.

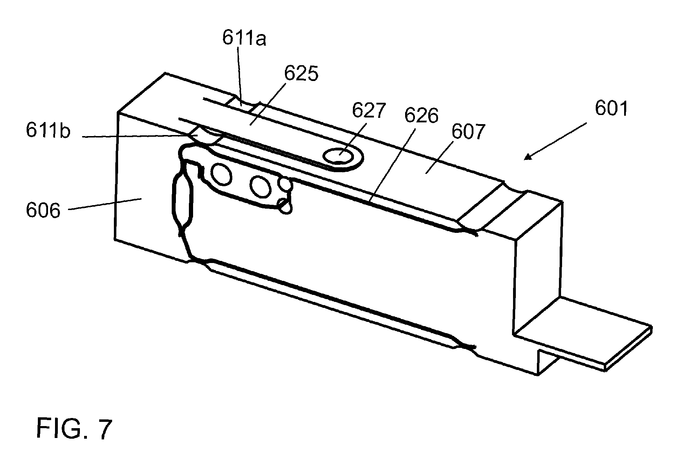

Figur 7 zeigt eine weitere Ausführungsform einer erfindungsgemässen Kraftmessvorrichtung 601 in einer stark schematisierten perspektivischen Darstellung. Der mit einer Bohrung mit konischem Anzug 627 zur Aufnahme einer Waagschale (wie bereits in den Figuren 1 bis 3 dargestellt) versehene Trägerarm 625 verläuft hier auf etwa gleicher Höhe mit dem oberen Parallelogrammlenker 607. Zu diesem Zwecke ist das Biegelager, mit welchem der obere Parallelogrammlenker 607 am beweglichen Parallelogrammschenkel 606 angelenkt ist, zweigeteilt in je ein Teilbiegelager 611a und 611b. Um genügend Stabilität für den Trägerarm 625, welcher zumindest auf einem Teil seiner Länge von der Trennlinie 626 durchsetzt ist, zu erzielen, kann der obere Parallelogrammlenker 607 auch etwas dicker ausgestaltet sein. Insbesondere ist es von Vorteil, den Trennschnitt 626 etwas breiter als die anderen Trennschnitte auszugestalten.

Die Erfindung wurde hierin durch Beispiele beschrieben und illustriert, worin ein erfindungsgemässer Trägerarm an einer bekannten Kraftmessvorrichtung eines willkürlich gewählten Typs einstückig angeformt ist. Es versteht sich jedoch, dass ein solcher Trägerarm grundsätzlich bei jeder Kraftmessvorrichtung oder Wägezelle, welche einen Parallelführungsbereich mit einem feststehenden und einem beweglichen Parallelogrammschenkel sowie einem oberen und unteren Parallelogrammlenker aufweist, einstückig am beweglichen Parallelogrammschenkel angeformt werden kann. Dies gilt z.B. auch für Kraftmessvorrichtungen mit einem als separate Baueinheit ausgebildeten Kraftübertragungsbereich entsprechend dem bereits erwähnten Beispiel, das in der europäischen Patentanmeldung EP 0 518 202 A1 beschrieben wird.

Dabei ist ferner anzumerken, dass die Realisierung eines erfindungsgemässen Trägerarms nicht auf Kraftmessvorrichtungen oder Wägezellen beschränkt ist, welche nach dem hierin beispielhaft erwähnten Prinzip der elektromagnetischen Kraftkompensation funktionieren, denn der für die Realisierung eines erfindungsgemässen Trägerarms vorausgesetzte mechanische Aufbau mit einem feststehenden und einem beweglichen Parallelogrammschenkel sowie einem oberen und unteren Parallelogrammlenker findet sich auch bei Kraftmessvorrichtungen, die auf andern elektromechanischen Wandlerprinzipien basieren, wie zum Beispiel manche Dehnmessstreifenlastzellen und Schwingsaitenlastzellen.

**Bezugszeichenliste**

| | |
|---|---|
| 1,101,201,301, 401,501,601 | Kraftmessvorrichtung |
| 2,302 | Grundplatte |
| 3,203,303,403 | Waagschale |
| 4, | Konischer Zapfen |
| 5,105,205,405 | Feststehender Parallelogrammschenkel |
| 6,106,206,306,406,606 | Beweglicher Parallelogrammschenkel |
| 7,107,207,307,407,507,607 | Oberer Parallelogrammlenker |
| 8,108 | Unterer Parallelogrammlenker |
| 9,10,11,12,16,18,20,409 | Biegelager |
| 611 a,611 b | Teilbiegelager |
| 15,215,515 | Ausleger |
| 17 | Kopplungsglied |
| 19 | Kürzerer Hebelarm |
| 21 | Längerer Hebelarm |
| 22 | Befestigungslöcher |
| 23 | Weitere Löcher |
| 25,125,225,325,425,625 | Trägerarm |
| 26,326,426,626 | Trennschnitt |
| 27,127a,127b,127c,227,627 | Bohrung mit konischem Anzug |
| 28,228 | Zylindrische Durchgangsbohrung |
| 29,229 | Zylindrische Sackbohrung |
| 30 | Gewindebohrungen |
| 31 | Montiersockel |
| 32 | Durchbruch in 8 |
| 33 | Horizontaler Träger |
| 204 | Durchbohrter konischer Zapfen |
| 234 | Zylindrischer Stift |
| 236 | Schraubendruckfeder |
| 237 | Anschlag von 204 |
| 210 | Aufnahme für Kalibriergewicht |
| 211 | Kalibriergewicht |
| 435 | Verbindungselement, Hülse |
| 327,427,527 | Kegelstumpfförmige Erhebung |
| 530 | Gewindebohrung in 527 |
| 531 | Durchgangsbohrung in 507 |
| 532 | Stellschraube |
| 533 | Stift |

## Patentansprüche

1. Kraftmessvorrichtung (1,101,201,301,401,501,601) mit einem Lasteinleitungsbereich, einem Festbereich, einem Parallelführungsbereich und einem Kraftübertragungsbereich, worin zumindest der Lasteinleitungsbereich, der Festbereich und der Parallelführungsbereich zusammen als einstückige Parallelogrammführung ausgebildet sind mit einem den Festbereich bildenden feststehenden Parallelogrammschenkel (5,105,405), einem den Krafteinleitungsbereich bildenden beweglichen Parallelogrammschenkel (6,106,206,306,406,606), sowie einem oberen und einem unteren Parallelogrammlenker (7,107,207,307,407,507,607; 8,108), welche an ihren Enden durch Bielelagerstellen (9,10,11,12,409,611a,611b) mit den Parallelogrammschenkeln (5,105,405; 6,106,206,306,406,606) verbunden sind, **dadurch gekennzeichnet, dass** ein als Trägerarm (25,125,225,325,425,625) ausgebildeter Waagschalenträger im Krafteinleitungsbereich in der Weise monolithisch integriert ist, dass der Trägerarm (25,125,225,325,425,625) sich als integrale Fortsetzung des beweglichen Parallelogrammschenkels (6,106,206,306,406,606) im wesentlichen parallel zum oberen Parallelogrammlenker (7,107,207,307,407,507,607) in Richtung des feststehenden Parallelogrammschenkels (5,105,405) über die dem beweglichen Parallelogrammschenkel (6,106,206,306,406,606) zugewandte Biegelagerstelle (11, 611a, 611b) hinaus erstreckt, wobei mindestens ein Sitz (27,127a,127b,127c,227,327,427,527,627) für eine Waagschale (3,203,303,403) auf dem Trägerarm (25,125,225,325,425,625) angeordnet ist.

2. Kraftmessvorrichtung gemäss Anspruch 1, **dadurch gekennzeichnet, dass** sich der Trägerarm (25,125,225,325,425) mit geringem Abstand zum oberen Parallelogrammlenker (7,107,207,307,407,507) in Richtung des feststehenden Parallelogrammschenkels (5,105,405) erstreckt.

3. Kraftmessvorrichtung gemäss Anspruch 1 oder 2, **dadurch gekennzeichnet, dass** sich der Trägerarm (425) über die dem feststehenden Parallelogrammschenkel (406) zugewandte Biegelagerstelle (409) hinaus in den Bereich des feststehenden Parallelogrammschenkel (406) erstreckt.

4. Kraftmessvorrichtung gemäss einem der Ansprüche 1 bis 3, **dadurch gekennzeichnet, dass** der bewegliche Parallelogrammschenkel (206) mit einer Aufnahme (210) für ein Kalibriergewicht (211) versehen ist.

5. Kraftmessvorrichtung gemäss Anspruch 4, **dadurch gekennzeichnet, dass** die Aufnahme (210) für ein Kalibriergewicht (211) einstückig mit dem bewegliche Parallelogrammschenkel (206,) ausgebildet ist.

6. Kraftmessvorrichtung gemäss einem der Ansprüche 1 bis 3, **dadurch gekennzeichnet, dass** der feststehende Parallelogrammschenkel (5) einen Ausleger (15,215,515) aufweist, welcher sich in einen von den Parallelogrammlenkern (7,107,207,307,407,507,607; 8,108) und dem beweglichen Parallelogrammschenkel (6,106,206,306,406,606) umgrenzten Innenbereich der Kraftmessvorrichtung (1,101,201,301,401,501,601) hinein erstreckt

7. Kraftmessvorrichtung gemäss einem der Ansprüche 1 bis 6, **dadurch gekennzeichnet, dass** der mindestens eine Sitz für die Waagschale als eine senkrechte Bohrung (27,127a,127b,127c,227,627) mit konischem Anzug in dem Trägerarm (25,125,225,625) ausgebildet ist, welche einen unten an der Waagschale (3,203) befestigten konischen Zapfen (4,204) spielfrei aufnehmen kann.

8. Kraftmessvorrichtung gemäss einem der Ansprüche 1 bis 6, **dadurch gekennzeichnet, dass** der mindestens eine Sitz für die Waagschale als kegelstumpfförmige Erhebung (327,427,527) auf dem Trägerarm (325,425,525) ausgebildet ist, welche ein unten an der Waagschale (303,403) befestigtes Verbindungselement (303,404) mit einer zu der kegelstumpfförmigen Erhebung (327,427,527) komplementären konischen Bohrung spielfrei aufnehmen kann.

9. Kraftmessvorrichtung gemäss Anspruch 8, **dadurch gekennzeichnet, dass** die kegelstumpfförmige Erhebung (327,427,) auf dem Trägerarm (325,425) durch einen Fräsvorgang einstückig angeformt ist.

10. Kraftmessvorrichtung gemäss Anspruch 7, **dadurch gekennzeichnet, dass** die Bohrung (27,227) durch den Trägerarm (25,225) sich weiter als zylindrische Durchgangsbohrung (28,228) mindestens durch den oberen Parallelogrammlenker (7,207) hindurch und gegebenenfalls als Sackbohrung (29,229) in den Ausleger (15,215) des feststehenden Parallelogrammschenkels (5,205) hinein fortsetzt und dass der Durchmesser der zylindrischen Durchgangsbohrung (28,228) und gegebenenfalls der Sackbohrung (29,229) so bemessen sind, dass der im Trägerarm sitzende konische Zapfen (4,204) der Waagschale (3,203) mit hinreichender Lichtweite durch den oberen Parallelogrammlenker (7,207) hindurch ragen und bei Überbelastung der Kraftmessvorrichtung (1,201) auf dem Ausleger (15,215) anschlagen kann.

11. Kraftmessvorrichtung gemäss Anspruch 10, **dadurch gekennzeichnet, dass** ein konischer Zapfen (207) eine senkrechte zylindrische Bohrung aufweist, in welcher ein Stift (234) gleiten kann, an dessen oberer Stirnseite die Waagschale (203) befestigt ist, wobei eine den Stift (234) umgebende vorgespannte Druckfeder (236) die Waagschale (203) gegenüber dem konischen Zapfen (204) entgegen der Lastrichtung vorspannt.

12. Kraftmessvorrichtung gemäss Anspruch 7, **dadurch gekennzeichnet, dass** der Trägerarm (25) derart ausgebildet ist, dass er sich unter Belastung in vorausbestimmbarem Masse soweit durchbiegt, dass der konische Zapfen (4) bei Erreichen einer Überlastgrenze auf dem Ausleger (15) anschlägt.

13. Kraftmessvorrichtung gemäss einem der Ansprüche 1 bis 8, **dadurch gekennzeichnet, dass** der Trägerarm (425) derart ausgebildet ist, dass er sich unter Belastung in vorausbestimmbarem Masse soweit durchbiegt, dass der Trägerarm (425) bei Erreichen einer Überlastgrenze auf dem Ausleger (415) oder auf dem feststehenden Parallelogrammschenkel (405) anschlägt.

14. Kraftmessvorrichtung gemäss Anspruch 8, oder 9, **dadurch gekennzeichnet, dass** die kegelstumpfförmige Erhebung (527) mit einer konzentrischen senkrechten Gewindebohrung (530) versehen ist, welche sich als Durchgangsbohrung (531) durch den oberen Parallelogrammlenker (507) fortsetzt, wobei in der Gewindebohrung (530) eine Stellschraube (532) angeordnet ist, welche sich nach unten zu einem Stift (533) verjüngt, der die Durchgangsbohrung (531) des Parallelogrammlenkers (507) mit genügendem lichtem Abstand durchsetzt, wobei die Stellschraube (532) soweit in die Gewindebohrung (530) eingeschraubt wird, dass der Stift (533) einen gewünschten Anschlagsabstand vom Ausleger (515) hat und bei Erreichen einer Überlastgrenze auf dem Ausleger (515) anschlägt.

15. Kraftmessvorrichtung gemäss einem der Ansprüche 1 bis 14, **dadurch gekennzeichnet, dass** ein der Kraftuntersetzung dienendes Hebelsystem mit mindestens einem Hebel (19, 21) vorhanden ist, welcher Hebel an dem Ausleger (15) einstückig angeformt ist und welcher durch ein Biegelager (20) am Ausleger (15) drehbar gelagert ist.

16. Waage mit einer Kraftmessvorrichtung gemäss einem der Ansprüche 1 bis 15.
